# EUROPEAN PATENT APPLICATION

(11) **EP 3 179 227 A1**
(43) Date of publication of application: **14.06.2017**
(21) Application number: 16200779.3
(22) Date of filing: 25.11.2016
(51) Int. Cl.: G01N 1/22

(54) **EXHAUST GAS DILUTION DEVICE AND EXHAUST GAS MEASURING SYSTEM USING THE SAME**

(30) Priority: 10.12.2015 JP 2015241509
(71) Applicant: HORIBA, LTD., Kyoto-shi, Kyoto 601-8510 (JP)
(72) Inventor: KUMAGAI, Tatsuki, Kyoto, 601-8510 (JP)
(74) Representative: Müller Hoffmann & Partner

(57) **Abstract**

In order to provide an exhaust gas dilution device 100 capable of making a flow rate range wider than before, the exhaust gas dilution device 100 is adapted to include: a dilution tunnel 2 through which diluent gas such as air flows; an orifice member 51 adapted to block the dilution tunnel 2 except for an orifice hole 5a provided in a central part; and an exhaust gas introduction pipe 1 of which a discharge port 1a is disposed so as to face to the orifice hole 5a and face to a downstream side and through which exhaust gas is discharged from the discharge port 1a into the dilution tunnel 2. In addition, in the exhaust gas dilution device 100, the orifice member 51 is formed with a concave part S that is gradually concaved from an outer circumferential edge part toward the orifice hole 5a as viewed from an upstream side.

## Description

### Technical Field

The present invention relates to an exhaust gas dilution device adapted to dilute exhaust gas discharged from an internal combustion engine or the like for the purpose such as the component analysis of the exhaust gas, and to an exhaust gas measuring system using the exhaust gas dilution device.

### Background Art

When analyzing the components of exhaust gas of an internal combustion engine, the exhaust gas causes condensation or the like as it is to affect the analysis, and therefore after being diluted with diluent gas such as air, is introduced into an analytical instrument. A device to be used for the dilution is a full flow dilution device using a full tunnel or a partial dilution device using a micro tunnel.

For example, taking the full flow dilution device as an example, the tunnel of the full flow dilution device introduces thereinto the total amount of the exhaust gas discharged from the internal combustion engine as well as introducing thereinto the diluent gas having a controlled flow rate, and thereby the exhaust gas is diluted.

The important thing here is that the diluent gas and the exhaust gas must sufficiently mix with each other inside the tunnel.

For this purpose, in the past, in the middle of a tunnel, a flat plate-like orifice plate 33 formed with an orifice hole 32 at the center thereof is provided, and slightly upstream of or flush with the orifice hole 32, a discharge port a of an exhaust gas introduction pipe 34 is placed (see FIGS. 6 and 7 of Patent Literature 1).

This is to surely mix diluent gas and exhaust gas using a mixing effect due to the concentration of the diluent gas at the orifice hole 32.

The mixing effect caused by the orifice hole is more strongly exerted as the flow velocity of gas passing through the orifice increases. However, when increasing the gas flow velocity too much, although the mixing effect is enhanced, a pressure loss at the orifice hole increases to make the pressure of the discharge port negative, thus causing the problem of changing engine combustion conditions.

As a result, a gas flow velocity range that can prevent the problem caused by the negative pressure and moderately ensure the mixing effect is spontaneously defined. Also, the gas flow velocity range defined as described defines a dilutable flow rate range in this sort of conventional exhaust gas dilution device, and it is difficult to obtain a flow rate range exceeding the dilutable flow rate range.

The reason for this will be described.

Parameters contributing to the gas flow velocity are a flow rate (the mixed gas flow rate of air and the exhaust gas) and an orifice hole diameter. Increasing the mixed gas flow rate or decreasing the orifice hole diameter increases the gas flow velocity.

For example, when the orifice hole diameter is large and the mixed gas flow rate is small, the gas flow velocity at the orifice hole cannot be ensured. As a result, a predetermined mixing effect cannot be obtained, and therefore in such an exhaust gas dilution device, the dilutable flow rate range is shifted to a larger side.

On the other hand, when the orifice hole diameter is small and the mixed gas flow rate is large, a pressure loss at the orifice hole increases, and therefore in such an exhaust gas dilution device, the dilutable flow rate range is shifted to a smaller side.

Accordingly, as described above, it is difficult to expand the dilutable flow rate range to some extent or more in this sort of conventional exhaust gas dilution device.

However, the larger such a flow rate range is, the better it is. This is because as the flow rate range increases, a single exhaust gas dilution device makes it possible to do more various patterns of tests and also accept a test of internal combustion engines having more variously-sized displacements.

### Citation List

### Patent Literature

Patent Literature 1: Japanese Unexamined Patent Publication JP-A2001-249064

### Summary of Invention

### Technical Problem

Therefore, the present invention is made in order to provide an exhaust gas dilution device capable of expanding a flow rate range to exceed a conventional limit.

### Solution to Problem

That is, the exhaust gas dilution device according to the present invention is one including: a dilution pipe through which diluent gas such as air flows or nitrogen gas; an orifice member adapted to block the dilution pipe except for an orifice hole provided in a central part; and an exhaust gas introduction pipe of which a discharge port is disposed so as to face to or penetrate through the orifice hole and face to a downstream side and through which exhaust gas is discharged from the discharge port into the dilution pipe. In addition, in the exhaust gas dilution device, the orifice member is formed with a concave part that is gradually concaved from an outer circumferential edge part toward the orifice hole as viewed from an upstream side.

Specific embodiments adapted to simplify manufacturing and reduce weight include one in which the orifice member is one forming a hollow truncated conical shape.

Preferably, the tilt angle of a surface of the concave part is set to be 45° to 60° with respect to the inner circumferential surface of the dilution pipe as viewed in a virtual cross section obtained by cutting the dilution pipe along the axial line of the dilution pipe.

Specific embodiments adapted to make the effect of the present invention include an exhaust gas measuring system including: the exhaust gas dilution device including a dilution pipe through which diluent gas such as air flows or nitrogen gas, an orifice member adapted to block the dilution pipe except for an orifice hole provided in a central part, and an exhaust gas introduction pipe of which a discharge port is disposed so as to face to or penetrate through the orifice hole and face to a downstream side and through which exhaust gas is discharged from the discharge port into the dilution pipe, in addition, in the exhaust gas dilution device, the orifice member is formed with a concave part that is gradually concaved from an outer circumferential edge part toward the orifice hole as viewed from an upstream side ; and an exhaust gas measuring device adapted to sample mixed gas of the exhaust gas and the diluent gas, the mixed gas being produced by the exhaust gas dilution device, and measure a concentration or an amount of a predetermined component contained in the exhaust gas. Advantageous Effects of Invention

The exhaust gas dilution device according to the present invention is capable of expanding a flow rate range, and therefore makes it possible to do various tests and also accept a test of internal combustion engines having variously-sized displacements.

### Brief Description of Drawings

FIG. 1 is an overall schematic diagram of an exhaust gas dilution device and an exhaust gas measuring system in one embodiment of the present invention;
FIG. 2 is a vertical cross-sectional view in which an orifice member in the same embodiment is cut along an axial line;

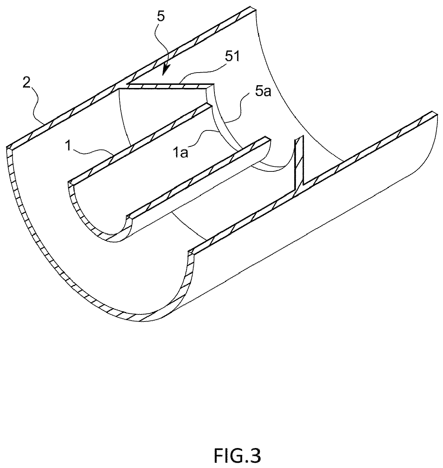

FIG. 3 is a perspective cross-sectional view illustrating a state where the orifice member in the same embodiment is cut along the axial line;
FIG. 4 is a vertical cross sectional view in which an orifice member in another embodiment of the present invention is cut along an axial line;
FIG. 5 is a vertical cross sectional view in which an orifice member in still another embodiment of the present invention is cut along an axial line; and
FIG. 6 is an overall schematic diagram of an exhaust gas dilution device and an exhaust gas measuring system in yet another embodiment of the present invention.

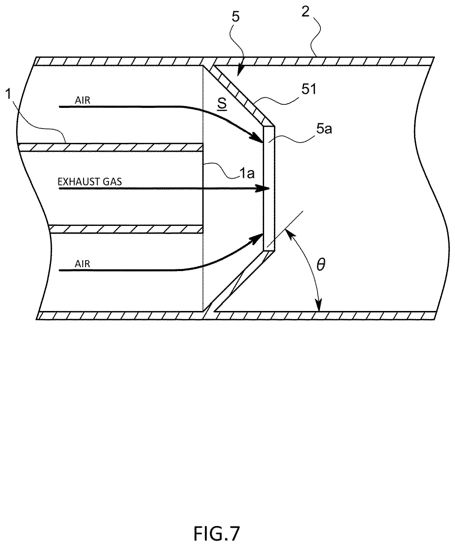

FIG. 7 is a vertical cross-sectional view in which an orifice member in yet another embodiment of the present invention.is cut along an axial line; Description of Embodiments

In the following, one embodiment of the present invention will be described with reference to drawings.

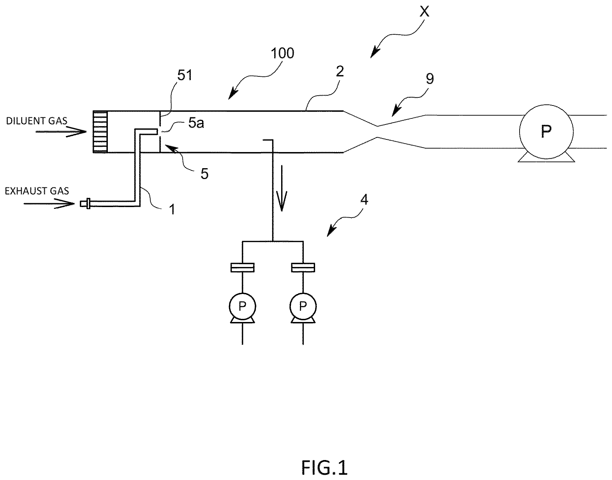

As illustrated in FIG. 1, an exhaust gas dilution device 100 according to the present embodiment is one of a full flow dilution type, and used as part of an exhaust gas measuring system X.

Specifically, the exhaust gas dilution device 100 includes: an exhaust gas sampling pipe 1 that is connected to an exhaust pipe (not illustrated) of an internal combustion engine and into which the total amount of exhaust gas is introduced; a circular pipe-shaped dilution tunnel 2 (hereinafter also simply referred to as a tunnel 2) as a dilution pipe into which the exhaust gas is introduced through the exhaust gas sampling pipe 1 and also air as diluent gas is introduced to mix them for diluting the exhaust gas; and a flow rate control device (CVS) 9 that makes the flow rate of mixed gas flowing through the tunnel 2 constant.

Note that numeral 4 in the diagram represents an exhaust gas measuring device constituting part of the exhaust gas measuring system X. Here, as an example of the exhaust gas measuring device, a filter collection device adapted to proportionally sample the mixed gas flowing through the tunnel 2, and samples PM contained in the sampled mixed gas is illustrated. As another exhaust gas measuring device, one adapted to measure the concentrations and amounts of various components such as CO₂, THC, and NOx in the exhaust gas can be cited.

In addition, in the present embodiment, the tunnel 2 is provided with a gas mixing structure 5 adapted to facilitates the mixture of the air and the exhaust gas.

The gas mixing structure 5 is one that includes an orifice member 51 having an orifice hole 5a in the center.

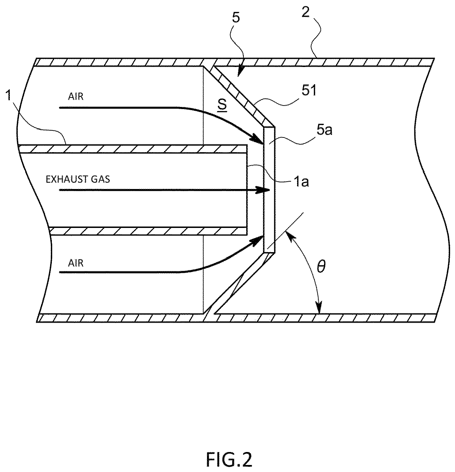

As illustrated in FIG. 2, the orifice member 51 is one forming a hollow truncated conical shape of which the outer circumferential edge is joined to the inner circumferential surface of the tunnel 2 without any gap in the middle of the tunnel 2, and disposed such that as viewed from the upstream side, the central part thereof is concaved to form a concave part S. The tilt angle θ of the surface of the concave part S is configured to be 45° to 60° with respect to the inner circumferential surface of the tunnel 2 as viewed in a virtual cross section obtained by virtually cutting along an axial line as illustrated in the diagram.

In addition, the terminal part of the exhaust gas sampling pipe 1 is extended from the upstream side toward the downstream side along the axial line of the tunnel 2, and a discharge port 1a of the exhaust gas sampling pipe 1 is configured to face to the downstream side on the upstream side of the orifice hole 5a. More specifically, the discharge port 1a is arranged coaxially with the orifice hole 5a so as to be positioned slightly upstream of (the surface on the upstream side of) the orifice hole 5a. Note that here the outside diameter of the exhaust gas sampling pipe 1 is set to be slightly smaller than the inside diameter of the orifice hole 5a.

In such a configuration, the air flows into the orifice hole 5a at a tilt from the gap between the terminal outer circumferential edge of the exhaust gas sampling pipe 1 and the surface of the concave part S, and mixes with the exhaust gas that is discharged from the exhaust port 1a and flows into the orifice hole 5a.

In this case, since a flow path of the air is gradually narrowed by the tilt surface of the concave part S of the orifice member 51 and then reaches the orifice hole 5a, even when increasing an air flow rate, a pressure loss is small, and therefore the mixing effect hardly changes according to the knowledge of the inventor.

As a result, since the exhaust gas dilution device 100 is capable of making a flow rate range larger than before, various patterns of tests can be done, and also a test of internal combustion engines having variously-sized displacements is also acceptable.

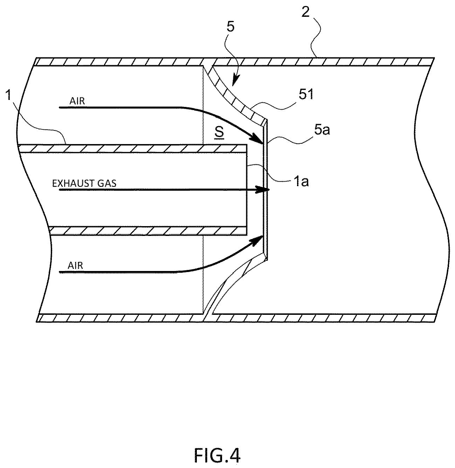

Note that the surface of the concave part S of the orifice member 51 does not have a constant angle, but as illustrated in FIG. 4, may be one having an angle that gradually decreases or increases toward the downstream side like a horn.

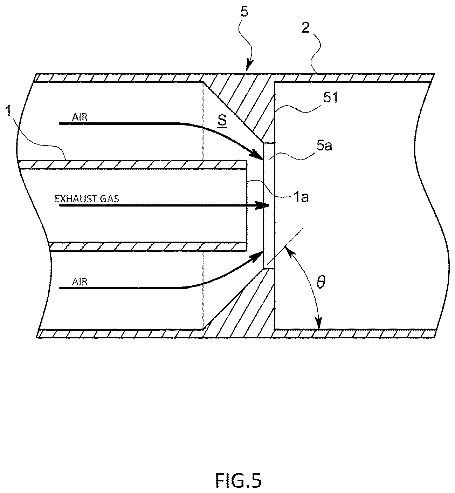

The orifice member 51 is not limited to a thin one, but as illustrated in FIG. 5, may be made thick to form the concave part S. In the case of FIG. 5, the surface on the downstream side of the orifice member 51 is perpendicular to the axis.

The terminal of the exhaust gas sampling pipe may be present on the upstream side of the orifice hole, be flush with the orifice hole, or penetrate through the orifice hole to be positioned on the downstream side of the orifice hole.

A dilution range may be determined with at least one or more of an aperture ratio of the orifice hole (the area of the orifice hole with respect to the inner circumferential cross-sectional area of the tunnel), the axial direction distance between the terminal of the exhaust gas sampling pipe and the orifice hole, the outside diameter of the exhaust gas sampling pipe and the inside diameter of the orifice hole, and the tilt angle of the concave part surface of the orifice member as parameters.

It goes without saying that as the dilution pipe, not only the so-called dilution tunnel but a general piping component may be used.

In addition, the present invention can also be applied to a partial dilution device.

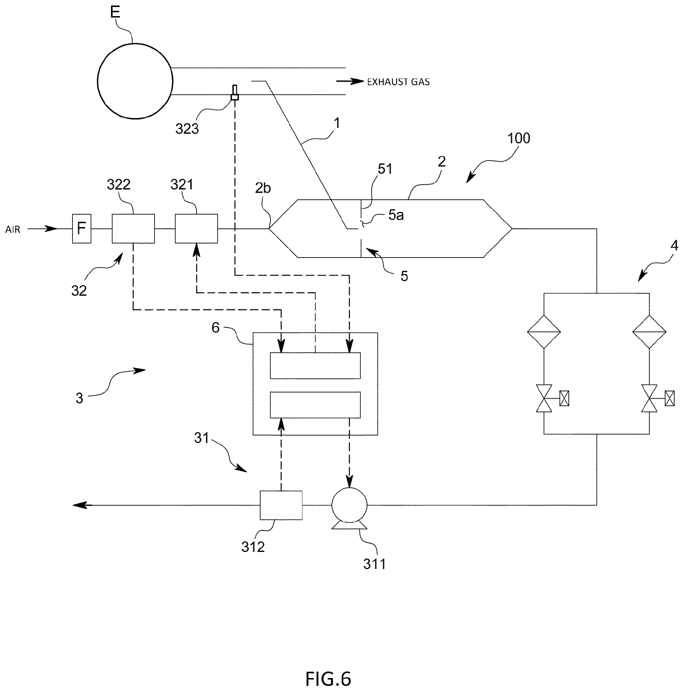

FIG. 6 illustrates an example of the partial dilution device.

In the diagram, numeral 1 represents an exhaust gas sampling pipe adapted to sample part of raw exhaust gas discharged from an internal combustion engine E.

Numeral 2 represents a dilution tunnel (hereinafter also simply referred to as a tunnel) adapted to introduce the raw exhaust gas thereinto through the exhaust gas sampling pipe 1 as well as introducing air as diluent gas thereinto to dilute the exhaust gas with the air.

Numeral 3 represents a flow rate control device adapted to perform control to make the flow rate of the exhaust gas sampled through the exhaust gas sampling pipe 1 equal to a predetermined ratio of the total flow rate of the exhaust gas discharged from the internal combustion engine E. The flow rate control device 3 is configured to include: a constant flow rate keeping mechanism 31 adapted to keep the flow rate of mixed gas led out of the tunnel 2 constant; and a diluent gas flow rate control mechanism 32 adapted to control the flow rate of the air to be introduced into the tunnel 2 in accordance with the exhaust gas flow rate.

The constant flow rate keeping mechanism 31 is one including a pump 311 provided downstream of a filter collection device 4 and a mixed gas flow rate sensor 312, in which a control circuit 6 controls the rotation speed of the pump 311 so as to make the mixed gas flow rate measured by the mixed gas flow rate sensor 312 constant.

The diluent gas flow rate control mechanism 32 is one including: an adjustment mechanism 321 that is provided in an air introduction flow path connected to an introduction port 2b of the tunnel 2 and adapted to adjust the flow rate of the air to be introduced into the tunnel 2; an air flow rate measurement sensor 322 adapted to measure the air flow rate; and an exhaust gas flow rate sensor 323 adapted to measure the total flow rate of the exhaust gas discharged from the internal combustion engine E. Also, the control circuit 6 controls the air flow rate such that a sampling flow rate calculated by subtracting the air flow rate measured by the air flow rate measurement sensor 322 from the mixed gas flow rate becomes equal to the predetermined ratio of the exhaust gas total flow rate measured by the exhaust gas flow rate sensor 323.

Numeral 4 represents an exhaust gas analyzing device, and as the exhaust gas analyzing device, a filter collection device adapted to sample PM contained in the mixed gas of the exhaust gas and the air discharged from the tunnel 2 is illustrated here.

Besides, various modifications and combinations of the embodiments may be made without departing from the scope of the present invention.

### Reference Signs List

- X:: Exhaust gas measuring system
- 100:: Exhaust gas dilution device
- 1:: Exhaust gas introduction pipe
- 1a:: Discharge port
- 2:: Dilution tunnel
- 51:: Orifice member
- 5a:: Orifice hole
- S:: Concave part

## Claims

1. An exhaust gas dilution device comprising:
a dilution pipe through which diluent gas such as air flows; an orifice member adapted to block the dilution pipe except for an orifice hole provided in a central part; and an exhaust gas introduction pipe of which a discharge port is disposed so as to face to or penetrate through the orifice hole and face to a downstream side and through which exhaust gas is discharged from the discharge port into the dilution pipe, wherein
the orifice member is formed with a concave part that is gradually concaved from an outer circumferential edge part toward the orifice hole as viewed from an upstream side.

2. The exhaust gas dilution device according to claim 1, wherein
the orifice member is one forming a hollow truncated conical shape.

3. The exhaust gas dilution device according to claim 1, wherein
a tilt angle of a surface of the concave part is set to be 45° to 60° with respect to an inner circumferential surface of the dilution pipe in a virtual cross section obtained by cutting the dilution pipe along an axial line of the dilution pipe.

4. An exhaust gas measuring system comprising:
the exhaust gas dilution device according to claim 1; and
an exhaust gas measuring device adapted to sample mixed gas of the exhaust gas and the diluent gas, the mixed gas being produced by the exhaust gas dilution device, and measure a concentration or an amount of a predetermined component contained in the exhaust gas.
